# EUROPÄISCHE PATENTSCHRIFT

(11) **EP 4 104 319 B1**
(45) Veröffentlichungstag und Bekanntmachung des Hinweises auf die Patenterteilung: **31.12.2025**
(21) Anmeldenummer: 21705149.9
(22) Anmeldetag: 10.02.2021
(51) Int. Cl.: H04B 10/85, H04B 10/038, H04B 10/27, H04L 12/28

(54) **GLASFASERNETZWERK**
FIBER-OPTIC NETWORK
RÉSEAU DE FIBRE OPTIQUE

(30) Priorität: 12.02.2020 DE 102020103652
(43) Veröffentlichungstag der Anmeldung: 21.12.2022
(73) Patentinhaber: OneFiber Interconnect Germany GmbH, 10117 Berlin (DE)
(72) Erfinder: FECHT, Holger, 66123 Saarbrücken (DE); KREMPER, Klaus, 55124 Mainz (DE); SCHMIDT, Frank, 66606 St Wendel (DE)
(74) Vertreter: Betten & Resch
(86) Internationale Anmeldenummer: PCT/EP2021/053249
(87) Internationale Veröffentlichungsnummer: WO 2021/160698

(56) Entgegenhaltungen:
- CN-A- 104 253 708
- CN-A- 108 494 476
- MICHAEL REINA: "Operationalizing a control plane network", OPTICAL FIBER COMMUNICATION (OFC), COLLOCATED NATIONAL FIBER OPTIC ENGINEERS CONFERENCE, 2010 CONFERENCE ON (OFC/NFOEC), IEEE, PISCATAWAY, NJ, USA, 21 March 2010 (2010-03-21), pages 1 - 22, XP031676653
- SHUICHI OKAMOTO ET AL: "Multi-vendor interoperability demonstration of wavelength switched optical network (WSON) with GMPLS lambda-label extension", 35TH EUROPEAN CONFERENCE ON OPTICAL COMMUNICATION, 2009. ECOC '09, VIENNA, AUSTRIA, IEEE, PISCATAWAY, NJ, USA, 20 September 2009 (2009-09-20), pages 1 - 4, XP031546248, ISBN: 978-1-4244-5096-1
- KAMAN V ET AL: "Comparison of Wavelength-Selective Cross-Connect Architectures for Reconfigurable All-Optical Networks", PHOTONICS IN SWITCHING, 2006. PS '06. INTERNATIONAL CONFERENCE ON, IEEE, PI, 1 October 2006 (2006-10-01), pages 1 - 3, XP031147854, ISBN: 978-0-7803-9789-7, DOI: 10.1109/PS.2006.4350176

## Beschreibung

### GEBIET DER ERFINDUNG

Die vorliegende Erfindung betrifft ein Glasfasernetzwerk, insbesondere ein vermaschtes Glasfasernetzwerk, das Kreuzverteiler von einem ersten Typ und Kreuzverteiler von einem zweiten Typ aufweist.

### HINTERGRUND DER ERFINDUNG

Die Verbreitung des Internets hat dazu geführt, dass inzwischen nicht nur die meisten Bewohner eines Industrielandes Zugang zum Internet haben, sondern dass auch immer mehr Geräte und Vorrichtungen mit dem Internet verbunden sind (Internet-of-Things). So sind inzwischen nicht nur Computer und Mobiltelefone, sondern zunehmend auch andere Gegenstände des täglichen Lebens wie etwa Haushaltsgeräte, Autos, etc. mit dem Internet verbunden. Daraus resultieren komplett neue Anwendungen, wie z.B. Autonomes Fahren usw.

Wesentliche sicherheitskritische Infrastrukturelemente wie etwa Strom-, Wasser- und Energieversorgungseinrichtungen sind an das Internet angebunden und verwenden teilweise zur Kommunikation das Internet.

Daneben ist auch die Kommunikationsinfrastruktur inzwischen zu einem signifikanten Teil vom Internet abhängig.

Ein Ausfall des Internets wäre für daher für sicherheitskritische Infrastruktureinrichtungen eines modernen Landes von hoher Relevanz und stellt eine signifikante Bedrohung dar.

Ähnlich verhält es sich mit dem Ausfall von Telekommunikationseinrichtungen, die Teil des Telekommunikationsnetzwerks eines Landes darstellen. Router und Switches sowie Basisstationen eines Mobilfunknetzes sind lediglich einige Teile eines Kommunikationsnetzwerks, deren Ausfall die Telekommunikationsinfrastruktur eines Landes und damit das Funktionieren der sicherheitskritischen Infrastruktur gefährden kann.

Die Gefahr eines Ausfalls eines Telekommunikationsnetzwerks besteht dabei nicht lediglich aufgrund möglicher technischer Fehlfunktionen, sondern auch aufgrund eines gezielten Angriffs beispielsweise durch Hacker, fremde Geheimdienste oder kriminelle Organisationen.

So ist es beispielsweise denkbar, dass in Bausteinen der Kommunikationsinfrastruktur ein versteckter Zugang (sogenannte Back Doors) vorgesehen ist, der es einem Angreifer ermöglicht, diese Komponenten mit Hilfe dieser Back Doors "abzuschalten" oder zu zerstören. Die Folgen eines solchen Angriffs könnten fatal sein.

Im Falle eines Glasfasernetzwerks, insbesondere eines Glasfasernetzwerks, das eine ganze Region oder ein ganzes Land abdeckt, kann es fatal sein, wenn sämtliche Kreuzverteiler (Cross Connection Points CCP) eines solchen Netzwerks plötzlich ausfallen, beispielsweise weil sie alle von einem Virus befallen werden oder mittels eines versteckten Mechanismus, einer "backdoor", gezielt abgeschaltet werden.

Vor diesem Hintergrund ist es eine Aufgabe der vorliegenden Erfindung, ein Glasfasernetz mit höherer Ausfallsicherheit bereitzustellen.

MICHAEL REINA: "Operationalizing a control plane network", OPTICAL FIBER COMMUNICATION (OFC), COLLOCATED NATIONAL FIBER OPTIC ENGINEERS CONFERENCE, 2010 CONFERENCE ON (OFC/NFOEC), IEEE, PISCATAWAY, NJ, USA, 21. März 2010 (2010-03-21), Seiten 1-22, XP031676653, offenbart ein Glasfasernetzwerk gemäß dem Oberbegriff von Patentanspruch 1.

SHUICHI OKAMOTO ET AL: "Multi-vendor interoperability demonstration of wavelength switched optical network (WSON) with GMPLS lambda-label extension", 35TH EUROPEAN CONFERENCE ON OPTICAL COMMUNICATION, 2009. ECOC '09, VIENNA, AUSTRIA, IEEE, PISCATAWAY, NJ, USA, 20. September 2009 (2009-09-20), Seiten 1-4, XP031546248, ISBN: 978-1-4244-5096-1, offenbart ein optisches Netzwerk mit optischen Kreuzverteilern unterschiedlicher Hersteller, wobei Dokument die Interoperabilität der unterschiedlichen Kreuzverteiler demonstriert werden soll.

KAMAN V ET AL: "Comparison of Wavelength-Selective Cross-Connect Architectures for Reconfigurable All-Optical Networks", PHOTON ICS IN SWITCHING, 2006. PS '06. INTERNATIONAL CONFERENCE ON, IEEE, PI, 1. Oktober 2006 (2006-10-01), Seiten 1-3, XP031147854, DOI: 10.1109/PS.2006.4350176 ISBN: 978-0-7803-9789-7, offenbart unterschiedliche Implementierungsarten von optischen Kreuzverteilern.

CN 104 253 708 A und CN 108 494 476 A beschreiben einen Bypass, der genutzt werden kann um einen defekten Knoten in einem Netzwerk zu umgehen.

### ZUSAMMENFASSUNG DER ERFINDUNG

Die vorliegende Erfindung ist in Anspruch 1 definiert. Die abhängigen Ansprüche definieren Ausführungsbeispiele der Erfindung.

Gemäß einem Ausführungsbeispiel der Erfindung umfasst ein Glasfasernetzwerk Glasfasernetzwerk eine Vielzahl von N Knoten, die jeweils mittels optischer Kreuzverteiler implementiert sind, wobei sich das Glasfasernetzwerk über eine Fläche F erstreckt und aufweist:
eine Vielzahl von k Knoten, die jeweils mittels einem optischen Kreuzverteiler vom ersten Typ implementiert sind;
eine Vielzahl von m Knoten, die jeweils mittels einem optischen Kreuzverteiler vom zweiten Typ implementiert sind,
wobei das Glasfasernetzwerk zur Absicherung gegen den gleichzeitigen Ausfall mehrerer oder aller optischen Kreuzverteiler vom ersten Typ aufweist:
   für alle Kreuzverteiler vom ersten Typ einen remote schaltbaren Bypass, der ein beim Kreuzverteiler vom ersten Typ eingehendes Glasfaserkabel mit einem auf ein vom Kreuzverteiler vom ersten Typ ausgehenden Glasfaserkabel verbindet;
   eine Schaltvorrichtung, um remote die für die Kreuzverteiler vom ersten Typ vorgesehenen Bypässe zu aktivieren und so die Kreuzverteiler vom ersten Typ zu umgehen;
   wobei das Netz ferner so aufgebaut ist, dass ausgehend von einem beliebigen Kreuzverteiler vom ersten Typ des Glasfasernetzes mindestens ein Kreuzverteiler vom zweiten Typ des Glasfasernetzes über mindestens einen Netzwerkpfad als maximal n-ter Hop vom dem beliebigen Kreuzverteiler des ersten Typs aus erreichbar ist.

Auf diese Weise kann trotz eines Totalausfalls der Kreuzverteiler vom ersten Typ immer noch eine flächendeckende Netzversorgung sichergestellt werden.

Gemäß einem Ausführungsbeispiel ist n klein ist gegenüber der Gesamtzahl N der Kreuzverteiler im Netz, wobei n kleiner als N/10-tel, vorzugsweise kleiner als N/20-tel ist, weiter vorzugsweise n kleiner als 10 ist, vorzugsweise kleiner als 6 ist, weiter vorzugsweise n kleiner als drei ist und besonders bevorzugt n kleiner als 2 ist.

Je kleiner n gewählt wird, umso resilienter ist das Netz gegen einen Totalausfall der Kreuzverteiler vom ersten Typ.

Gemäß einem Ausführungsbeispiel weist ein remote schaltbarer Bypass eines Kreuzverteilers vom ersten Typ auf:
einen am eingehenden Glasfaserkabel angebrachten Switch;
ein Bypass-Kabel, das den Kreuzverteiler bypasst;
einen Combiner, der das Bypass-Kabel mit dem ausgehenden Kabel verbindet.

Auf diese Weise kann ein Bypass an einem Kreuzverteiler vom ersten Typ implementiert werden.

Gemäß einem Ausführungsbeispiel kommt das eingehende Kabel des Bypasses von einem Kreuzverteiler vom zweiten Typ und führt das ausgehende Kabel zu einem Kreuzverteiler vom zweiten Typ führt.

Auf diese Weise ist der durch den Bypass zu überbrückende Weg bis zum nächsten funktionierenden Kreuzverteiler (vom Typ 2) möglichst gering.

Gemäß einem Ausführungsbeispiel ist jedes eingehende Kabel eines Kreuzverteilers vom ersten Typ über einen Bypass mit einem ausgehenden Kabel des Kreuzverteilers vom ersten Typ verbunden ist.

Auf diese Weise kann für jedes mit einem Kreuzverteiler vom ersten Typ 1 verbundene Kabel die weitere Funktionsfähigkeit sichergestellt und ein "dead end" vermieden werden.

Gemäß einem Ausführungsbeispiel weist das Glasfasernetz auf:
eine zentrale Netzwerksteuervorrichtung, die mit den remote schaltbaren Bypässen verbunden ist, um die Bypässe im Falle des Ausfalls der Kreuzverteiler vom ersten Typ remote zu aktivieren.

Auf diese Weise kann zentral im Falle des Totalausfalls der Kreuzverteiler vom ersten Typ durch Aktivierung der Bypässe die Funktionalität des Netzes aufrechterhalten werden.

Gemäß einem Ausführungsbeispiel ist die zentrale Netzwerksteuervorrichtung zum Aktivieren der Bypässe über ein Steuernetzwerk mit den Bypässen verbunden, das funktional unabhängig von den Kreuzverteilern des ersten Typs ist.

Auf diese Weise ist ein Schalten der Bypässe selbst bei Ausfall der Kreuzverteiler vom ersten Typ immer noch möglich.

Gemäß einem Ausführungsbeispiel weist ein Bypass einen Splitter oder Switch auf, der ein eingehendes Kabel mit einem durch die Netzwerksteuervorrichtung wählbaren ausgehenden Kabel des Kreuzverteilers vom ersten Typ verbindet.

Auf diese Weise kann die Flexibilität des Aktivierungsszenarios für die Bypässe erhöht werden.

Gemäß einem Ausführungsbeispiel weicht die Zahl k der Kreuzverteiler vom ersten Typ um nicht mehr als einen Schwellwert S von der Zahl m der Kreuzverteiler vom zweiten Typ ab,
wobei
S kleiner ist als ein 30-tel von k;
S vorzugsweise kleiner ist als ein 20-tel von k
S weiter vorzugsweise kleiner ist als ein 10-tel von k.

Auf diese Weise kann ein "Klumpenrisiko" durch gehäuftes Auftreten von Kreuzverteilern vom ersten Typ vermieden werden.

Gemäß einem Ausführungsbeispiel ist in einer beliebigen Teilfläche F1, die um einen Faktor F2 kleiner ist als die Gesamtfläche des Netzes und die mindestens zwei Kreuzverteiler enthält, mindestens ein Kreuzverteiler vom ersten Typ und mindestens ein Kreuzverteiler vom zweiten Typ vorgesehen, wobei
F gleich 5 ist;
F vorzugsweise gleich 10 ist,
weiter vorzugsweise F gleich 20 ist,
weiter vorzugsweise F gleich 30 ist;
weiter vorzugsweise F gleich 40 ist;
weiter vorzugsweise F gleich 50 ist.

Auch hierdurch kann zusätzlich ein "Klumpenrisiko" durch gehäuftes Auftreten von Kreuzverteilern vom ersten Typ vermieden werden.

Gemäß einem Ausführungsbeispiel ist der Kreuzverteiler vom ersten Typ ein Kreuzverteiler eines ersten Herstellers und der Kreuzverteiler vom zweiten Typ ein Kreuzverteiler eines zweiten Herstellers ist, und/oder
der Kreuzverteiler vom ersten Typ ein Kreuzverteiler aus einem ersten Herstellungsland ist und der Kreuzverteiler vom zweiten Typ ein Kreuzverteiler aus einem zweiten Herstellungsland, und/oder
der Kreuzverteiler vom ersten Typ unterscheidet sich vom Kreuzverteiler vom zweiten Typ in mindestens einer Soft- und/oder Hardwarekomponente vom Kreuzverteiler des zweiten Typs.

Dadurch ist eine Kategorisierung in Kreuzverteiler vom ersten und zweiten Typ möglich.

### BESCHREIBUNG DER ZEICHNUNGEN

Fig. 1 zeigt schematisch ein herkömmliches Glasfasernetz mit Kreuzverteilern eines Typs.
Fig. 2 bis 4 zeigen schematisch ein Glasfasernetzwerk gemäß einem Ausführungsbeispiel der Erfindung.
Fig. 5 und 6 zeigen schematisch einen Bypass gemäß einem Ausführungsbeispiel der Erfindung.

### DETAILLIERTE BESCHREIBUNG

Ausführungsbeispiele der Erfindung werden nachfolgend unter Bezugnahme auf die Zeichnungen beschrieben.

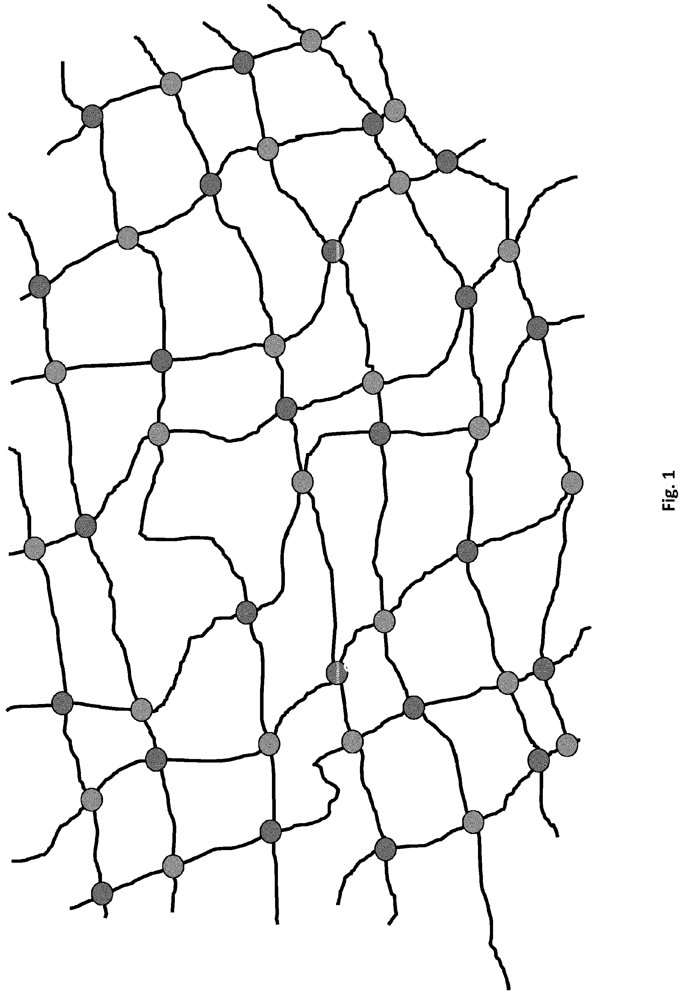

Fig. 1 zeigt einen Ausschnitt aus einem vermaschten Glasfasernetz mit einer Vielzahl von Kreuzverteilern, die als gefüllte Kreise in Fig. 1 dargestellt sind. Zwischen den Kreuzverteilern können dabei (nicht gezeigte) Points of Presence (PoP) vorgesehen sein, an denen dann Leitungen abzweigen, um beispielsweise Ortslagen oder Teilnehmer, wie beispielsweise Individuen bzw. deren Haushalte, aber auch administrative Einheiten wie Ministerien, Bundesorganisationen, Landesorganisationen, etc. an das vermaschte Netz anzuschließen.

In Fig. 1 sind nur Kreuzverteiler von einem ersten Typ dargestellt, die sich nicht voneinander unterscheiden. Wird durch einen Angriff mit einem Virus oder durch eine sonstige für den Kreuzverteiler von diesem Typ spezifische Fehlfunktion, etwa durch Aktivierung eines "Kill-Switches" eines ausländischen Staates, der Kreuzverteiler von diesem Typ außer Betrieb gesetzt, so bricht das gesamte Glasfasernetz zusammen.

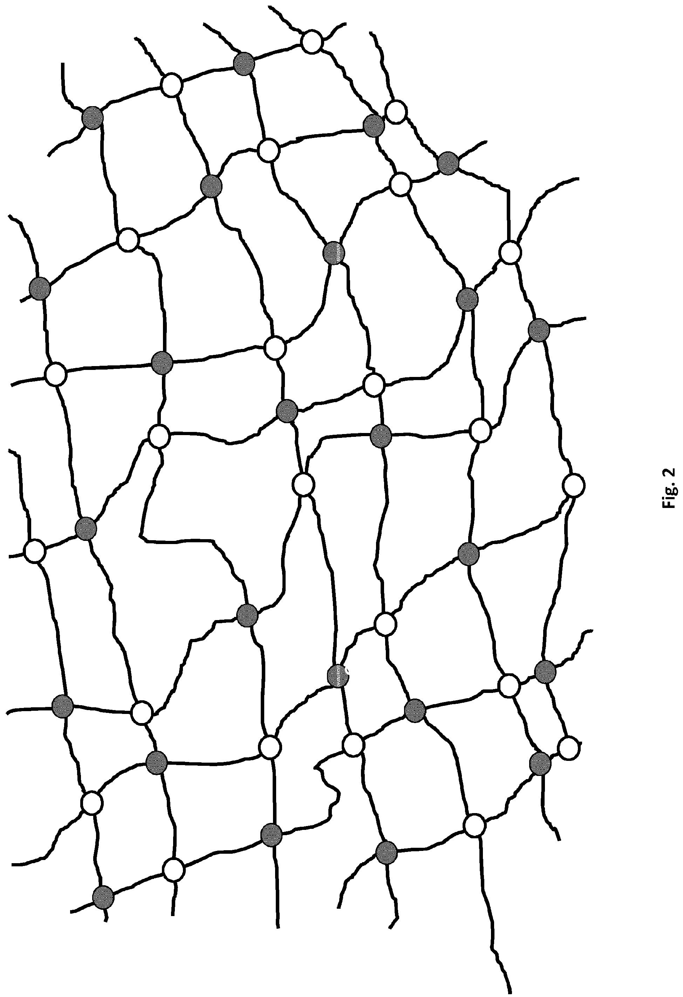

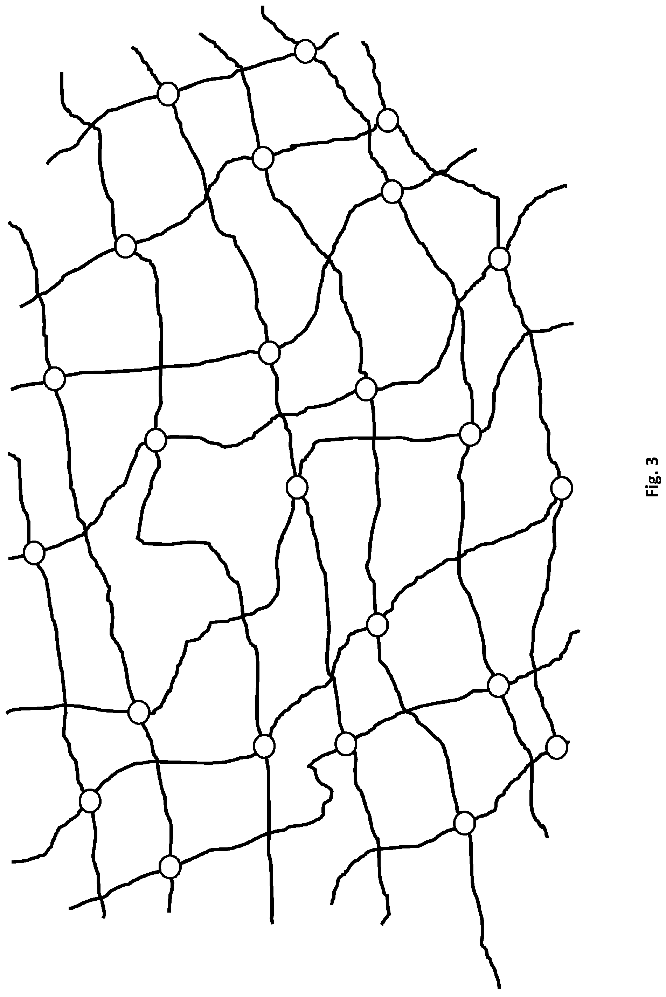

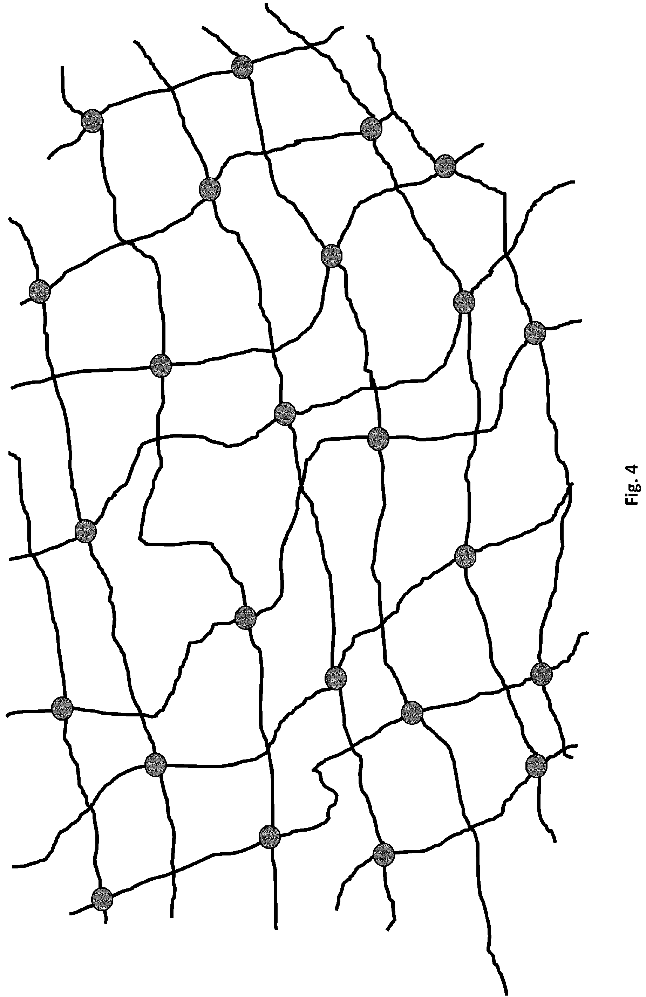

Zur Vermeidung dieses Effekts und zur Aufrechterhaltung der Netzabdeckung ist gemäß einem Ausführungsbeispiel ein Glasfasernetz wie in Fig. 2 schematisch gezeigt vorgesehen. Man erkennt, dass beim Glasfasernetz zwei unterschiedliche Typen von Kreuzverteilern vorgesehen sind, Kreuzverteiler vom ersten Typ, jeweils dargestellt durch einen gefüllten Kreis, und Kreuzverteiler von einem zweiten Typ, jeweils dargestellt durch einen nicht gefüllten Kreis. Dadurch wird das Glasfasernetz gewissermaßen in zwei Netze aufgeteilt, bzw. das Netz hat an zueinander komplementären Stellen Kreuzungspunkte bzw. Kreuzverteiler. Dies wir durch Fig. 3 und 4 verdeutlicht, die jeweils die beiden Teil-Netze zeigen, Fig. 3 das Netz mit den als gefüllte Kreise dargestellten Kreuzverteilern vom ersten Typ und den durch diese miteinander sich kreuzenden Glasfasern, und Fig. 4 das Netz mit den als nicht gefüllte Kreise dargestellten Kreuzverteilern vom zweiten Typ und den durch diese miteinander sich kreuzenden Glasfasern.

Die Kreuzverteiler vom ersten Typ können beispielsweise Kreuzverteiler eines ersten Herstellers sein, während die Kreuzverteiler vom zweiten Typ Kreuzverteiler eines anderen Herstellers sind. Alternativ oder zusätzlich können die Kreuzverteiler vom ersten Typ beispielsweise Kreuzverteiler aus einem ersten Herstellungsland sein, während die Kreuzverteiler vom zweiten Typ Kreuzverteiler eines anderen Herstellers aus einem zweiten Herstellungsland sind. Gemäß einem Ausführungsbeispiel unterscheiden sich die die Kreuzverteiler vom ersten Typ zumindest in einer Hard- oder Softwarekomponente von den Kreuzverteilern vom zweiten Typ.

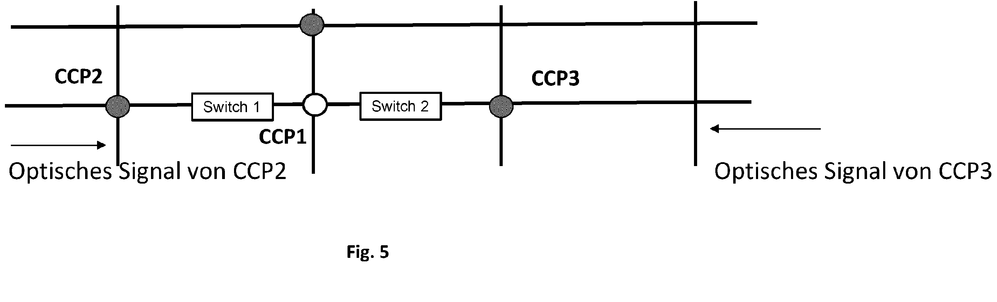

Neben dem Vorsehen von zwei Typen von Kreuzverteilern weist das Glasfasernetz gemäß einem Ausführungsbeispiel für alle Kreuzverteiler vom ersten Typ einen remote schaltbaren Bypass auf, der ein beim Kreuzverteiler vom ersten Typ eingehendes Glasfaserkabel mit einem auf ein vom Kreuzverteiler vom ersten Typ ausgehenden Glasfaserkabel verbindet. Ein solcher Bypass für einen Kreuzverteiler vom ersten Typ ist schematisch in Fig. 5 dargestellt.

Man erkennt in Fig. 5, dass zwischen dem Kreuzverteiler CCP1 (cross connection point 1) vom ersten Typ und dem Kreuzverteiler CCP2 (cross connection point 2) vom zweiten Typ ein Switch 1 vorgesehen ist, der mittels einer (nicht gezeigten) Netzwerksteuervorrichtung remote schaltbar ist. Wird der Switch aktiviert bzw. umgeschaltet, so wird mittels eines um den Kreuzverteiler CCP1 herumgeführten Glasfaserkabels der Kreuzverteiler vom ersten Typ umgangen zweiten umgangen und das eingehende Signal auf das vom Kreuzverteiler vom ersten Typ CCP1 wegführendes Kabel umgeleitet, der zum Kreuzverteiler CCP3 des zweiten Typs führt. In dieses Kabel wird das Signal mittels eines Combiners eingespeist. Für den vom Kreuzverteiler CCP3 kommenden Datenstrom wiederum ist analog dazu ein Switch 2 vorgesehen, der bei Aktivierung das Signal auf die vom CCP1 in Richtung des Kreuzverteilers CCP2 wegführende Glasfaser umleitet. Dort wird das Signal mittels eines Combiners in die zum CCP2 führende Glasfaser eingespeist.

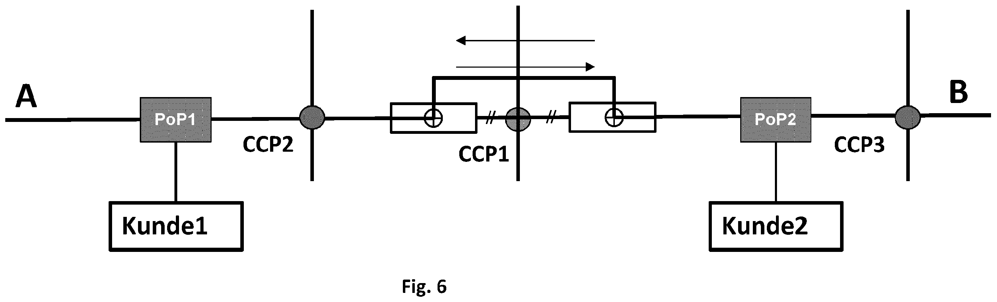

Fig. 6 zeigt diesen Mechanismus gemäß einem Ausführungsbeispiel noch weiter im Detail. Man erkennt die links und rechts vom CCP2 angebrachten Switches bzw. Combiner sowie das oder die den CCP1 bypassenden Glasfaserkabel. Der Bypass enthält dabei einen am eingehenden Glasfaserkabel angebrachten Switch; ein Bypass-Kabel, das den Kreuzverteiler bypasst; und einen Combiner, der das Bypass-Kabel mit dem ausgehenden Kabel verbindet. In umgekehrter Richtung funktioniert der Bypass analog, indem ein Switch oder Splitter rechts vom CCP1 das eingehende Signal auf das Umgehungskabel umlenkt, von dem es dann mittels des Combiners links vom CCP1 wieder dem vom CC1 nach links wegführenden Kabel zugeführt wird. Switch bzw. Splitter und Combiner sind dabei in Fig. 6 als eine Vorrichtung dargestellt, die beide Funktionalitäten erfüllt, sie können jedoch auch mittels getrennter Vorrichtungen implementiert werden.

Ferner sind in Fig. 6 noch zwei Points of Presence PoP dargestellt, mittels derer jeweils ein oder mehrere Kunden bzw. deren Endgeräte mit dem Glasfasernetz verbunden sind. Fällt nun der CCP1 aus, so ist dennoch dank des Bypasses der Pfad von CCP2 zu CCP3, also zwischen den Kreuzverteilern des zweiten Typs und damit auch zwischen Kunde 1 und Kunde 2 sichergestellt.

Gemäß einem Ausführungsbeispiel sind für alle Kreuzverteiler vom ersten Typ Bypässe vorgesehen, mittels derer die Umgehung der Kreuzverteiler vom ersten Typ remote schaltbar (durch Aktivierung der Switches) ermöglicht wird. Hierfür ist gemäß einem Ausführungsbeispiel eine (nicht gezeigte) Netzwerksteuervorrichtung (Network Operation Center NOC) vorgesehen, mittels derer die Switches zentral umgeschaltet werden können.

Werden nun beispielsweise durch Virenbefall oder mittels eines Kill-Switches von einem ausländischen Geheimdienst sämtliche Kreuzverteiler vom ersten Typ lahmgelegt, so können durch zentrales Umschalten vom NOC aus die Switches aktiviert werden und so die Betriebsfähigkeit des Netzes aufrechterhalten werden. PoP2 bzw. der darüber mit dem Glasfasernetz verbundene Kunde 2 kann auf diese Weise immer noch über den Kreuzverteiler CCP2 angesprochen bzw. mit einem Signal beliefert werden, analog kann PoP1 bzw. der darüber angeschlossene Kunde 1 vom CCP3 aus angesprochen bzw. mit einem Signal beliefert werden. Dabei ist es gemäß einem Ausführungsbeispiel vorteilhaft, wenn Entfernungen zwischen den CCPs auch bei Wegfall eines Types unter 50 km liegen, so dass die Signale nicht mittels Repeater bei einem Umschaltvorgang verstärkt werden müssen.

Lediglich für diejenigen Kundenterminals, die direkt mit dem CCP1 als PoP verbunden sind, wäre eine Erreichbarkeit bei einer Fehlfunktion des CCP1 nicht mehr gewährleistet. Dies lässt sich jedoch dadurch vermeiden, dass PoPs vor oder nach dem Kreuzverteiler vom ersten Typ bzw. vor dem Bypass vorgesehen sind und nicht der Kreuzverteiler selbst als PoP zum Anschluss von Terminals oder der letzten Meile fungiert.

Gemäß einem Ausführungsbeispiel umfasst das Glasfasernetz insgesamt N Kreuzverteiler, davon k Kreuzverteiler vom ersten Typ und m Kreuzverteiler vom zweiten Typ. Um trotz eines Ausfalls der Kreuzverteiler vom ersten Typ noch eine Funktionssicherheit und insbesondere auch eine hinreichende Abdeckung des Gesamtnetzes sicherzustellen, ist gemäß einem Ausführungsbeispiel vorgesehen, dass das Netz so aufgebaut ist, dass ausgehend von einem beliebigen Kreuzverteiler vom ersten Typ des Glasfasernetzes mindestens ein Kreuzverteiler vom zweiten Typ des Netzes über mindestens einen Netzwerkpfad als maximal n-ter Hop vom dem beliebigen Kreuzverteiler des ersten Typs aus erreichbar ist, wobei n klein ist gegenüber der Gesamtzahl N der Kreuzverteiler im Netz.

Dadurch wird sichergestellt, dass die Kreuzverteiler vom ersten und zweiten Typ topologisch nicht zu stark "geklumpt" sind, was dazu führen könnte, dass in einer Netzregion, die nur wenige Kreuzverteiler vom zweiten Typ enthält, ein Ausfall der Kreuzverteiler vom ersten Typ die Funktionsfähigkeit dieser gesamten Netzregion beeinträchtigen könnte. Stellt man jedoch sicher, dass spätestens als n-ter Hop ein Kreuzverteiler vom zweiten Typ vorliegt, wobei n klein ist, insbesondere klein gegenüber der Gesamtzahl N der Kreuzverteiler im Netz, so ist sichergestellt, dass in jeder beliebigen Teilregion des Netzes ein Ausfall der Kreuzverteiler vom ersten Typ durch Aktivieren der Switches bzw. der Bypässe kompensiert und die Funktionsfähigkeit des Netzes aufrechterhalten werden kann. Zwar ist das dann resultierende Netz wegen das Ausfalls der Kreuzverteiler vom ersten Typ geringer vermascht als das ursprüngliche Netz, bei dem die Kreuzverteiler beider Typen funktionsfähig waren, aber durch die Bypässe und die topologische Netzanordnung mit maximal n Hops zum nächsten Kreuzverteiler vom zweiten Typ, der dann noch funktioniert, ist immer noch eine weiträumige, flächendeckende Netzabdeckung sichergestellt.

Hierfür ist n vorzugsweise klein sein gegenüber der Gesamtzahl N der Kreuzverteiler im Netz. Beispielsweise ist gemäß einem Ausführungsbeispiel n kleiner als N/10-tel, vorzugsweise kleiner als N/20-tel. Weiter vorzugsweise ist n kleiner als 10 ist, vorzugsweise kleiner als 6 ist, weiter vorzugsweise ist n kleiner als drei und besonders bevorzugt ist n kleiner als 2. Bei der Wahl n<2 bzw. von n=1 ist sichergestellt, dass jeder beliebige Kreuzverteiler vom ersten Typ mindestens einen direkten Nachbarn hat, der ein Kreuzverteiler vom zweiten Typ ist. Auf diese Art und Weise lässt sich ein besonders eng vermaschtes Glasfasernetz durch Aktivierung der Bypässe selbst dann aufrechterhalten, wenn sämtliche Kreuzverteiler vom ersten Typ ausfallen. Aber auch für größere n ist immer noch eine flächendeckende Abdeckung bzw. Vermaschung des Gesamtnetzes und damit eine Aufrechterhaltung der Funktionsfähigkeit möglich, solange n klein gegenüber der Gesamtzahl N der Kreuzverteiler ist.

Gemäß einem Ausführungsbeispiel ist jedes eingehende Kabel eines Kreuzverteilers vom ersten Typ über einen Bypass mit einem ausgehenden Kabel des Kreuzverteilers vom ersten Typ verbunden. Dadurch wird sichergestellt, dass sämtliche bei einem Kreuzverteiler ein-bzw. ausgehenden Glasfasern durch entsprechendes Bypassen dem Netz zur Weiterleitung von Signalen "erhalten" bleiben, obwohl der Kreuzverteiler vom ersten Typ ausgefallen ist. Im Falle von fig. 6 bedeutet das, dass zusätzlich zum gezeigten Bypass in horizontaler Richtung auch ein Bypass in vertikaler Richtung vorgesehen ist. Gemäß diesem Ausführungsbeispiel sind dann nicht nur wie in Fig. 6 Switches zur Umgehung von CCP1 von CCP2 zu CCP3 und umgekehrt vorgesehen, sondern auch zum Bypassen von oben nach unten bzw. von unten nach oben, also zum "Kurzschließen" der beiden in Fig. 6 in vertikaler Richtung dargestellten Glasfasern.

Gemäß einem Ausführungsbeispiel ist eine zentrale Netzwerksteuervorrichtung (Network Operation Center NOC) vorgesehen, die mit den remote schaltbaren Bypässen verbunden ist, um die Bypässe im Falle des Ausfalls der Kreuzverteiler vom ersten Typ remote zu aktivieren. Diese ist dabei vorzugsweise ein Steuernetzwerk, das mit den Bypässen verbunden ist und das dabei funktional unabhängig von den Kreuzverteilern des ersten Typs ist, beispielsweise durch parallel zum Glasfasernetz separat verlegte Fasern, die jedoch nicht die Kreuzverteiler vom ersten Typ passieren, aber mit den vor bzw. hinter diesen angebrachten Switches verbunden sind, um diese ansteuern zu können. Dadurch ist sichergestellt, dass in jedem Fall die Bypässe aktiviert werden können, trotz Ausfall der Kreuzverteiler vom ersten Typ.

Gemäß einem Ausführungsbeispiel weist ein Bypass einen Splitter oder Switch auf, der ein eingehendes Kabel mit einem durch die Netzwerksteuervorrichtung NOC wählbaren ausgehenden Kabel des Kreuzverteilers vom ersten Typ verbindet. Das kann beispielsweise realisiert werden, indem als Switch nicht nur ein einfacher a/b-Switch sondern ein a/b/c/d-Switch verwendet wird. Abhängig von dem konkreten Ausfallszenario können dann auch adaptiv verschiedene Aktivierungsszenarien für die Bypässe implementiert werden.

Gemäß einem Ausführungsbeispiel weicht die Zahl k der Kreuzverteiler vom ersten Typ um nicht mehr als einen Schwellwert S von der Zahl m der Kreuzverteiler vom zweiten Typ abweicht. Auf diese Weise kann sichergestellt werden, dass nicht zu viele Kreuzverteiler vom ersten Typ verwendet werden, was das "Klumpenrisiko" und damit das Ausfallrisiko erhöhen würde. Vorzugsweise ist dabei S kleiner ist als ein 30-tel von k; weiter vorzugsweise kleiner als ein 20-tel von k, weiter vorzugsweise ist S kleiner ist als ein 10-tel von k.

Gemäß einem weiteren Ausführungsbeispiel ist in einer beliebigen Teilfläche F1, die um einen Faktor F2 kleiner ist als die Gesamtfläche des Netzes und die mindestens zwei Kreuzverteiler enthält, mindestens ein Kreuzverteiler vom ersten Typ und mindestens ein Kreuzverteiler vom zweiten Typ vorgesehen. Je größer dabei der Faktor F2 ist, umso besser ist sichergestellt, dass selbst in kleinen Teilflächen F1 mindestens ein Kreuzverteiler vom zweiten Typ vorhanden ist, um die Signalversorgung dieser Teilfläche im Falle des Ausfalls sämtlicher Kreuzverteiler vom ersten Typ sicher zu stellen. Gemäß einem Ausführungsbeispiel ist dabei F2 gleich 5, vorzugsweise ist F2 größer gleich 10, weiter vorzugsweise ist F2 größer gleich 20 ist, weiter vorzugsweise ist F2 gleich 30.

Die beschriebenen Ausführungsbeispiele stellen sicher, dass im Falle eines Totalausfalls der Kreuzverteiler vom ersten Typ immer noch eine ausreichende Netzabdeckung zur flächendeckenden Versorgung aller Anschlüsse sichergestellt ist.

## Patentansprüche

1. Glasfasernetzwerk mit einer Vielzahl von N Knoten, die jeweils mittels optischer Kreuzverteiler implementiert sind, wobei sich das Glasfasernetzwerk über eine Fläche F erstreckt und aufweist:
eine Vielzahl von k Knoten, die jeweils mittels einem optischen Kreuzverteiler (CCP1) vom ersten Typ implementiert sind;
eine Vielzahl von m Knoten, die jeweils mittels einem optischen Kreuzverteiler vom zweiten Typ (CCP2, CCP3) implementiert sind,
wobei das Netz ferner so aufgebaut ist, dass ausgehend von einem beliebigen Kreuzverteiler vom ersten Typ (CCP1) des Glasfasernetzes mindestens ein Kreuzverteiler vom zweiten Typ (CCP2, CCP3) des Glasfasernetzes über mindestens einen Netzwerkpfad als maximal n-ter Hop vom dem beliebigen Kreuzverteiler des ersten Typs (CCP1) aus erreichbar ist, **dadurch gekennzeichnet, dass** das Glasfasernetzwerk zur Absicherung gegen den gleichzeitigen Ausfall mehrerer oder
aller optischen Kreuzverteiler vom ersten Typ (CCP1) aufweist:
für alle Kreuzverteiler vom ersten Typ einen remote schaltbaren Bypass, der ein beim Kreuzverteiler vom ersten Typ (CCP1) eingehendes Glasfaserkabel mit einem auf ein vom Kreuzverteiler vom ersten Typ ausgehenden Glasfaserkabel verbindet;
eine Schaltvorrichtung, um remote die für die Kreuzverteiler vom ersten Typ vorgesehenen Bypässe zu aktivieren und so die Kreuzverteiler vom ersten Typ zu umgehen.

2. Glasfasernetzwerk nach Anspruch 1, wobei n klein ist gegenüber der Gesamtzahl N der Kreuzverteiler im Netz, wobei n kleiner als N/10-tel ist, vorzugsweise kleiner als N/20-tel ist, weiter vorzugsweise n kleiner als 10 ist, vorzugsweise kleiner als 6 ist, weiter vorzugsweise n kleiner als drei ist und besonders bevorzugt n kleiner als 2 ist.

3. Glasfasernetzwerk nach Anspruch 1 oder 2, wobei ein remote schaltbarer Bypass eines Kreuzverteilers vom ersten Typ (CCP1) aufweist:
einen am eingehenden Glasfaserkabel angebrachten Switch;
ein Bypass-Kabel, das den Kreuzverteiler bypasst;
einen Combiner, der das Bypass-Kabel mit dem ausgehenden Kabel verbindet.

4. Glasfasernetzwerk nach einem der Ansprüche 1 bis 3, wobei
das eingehende Kabel des Bypasses von einem Kreuzverteiler vom zweiten Typ (CCP2, CCP3) kommt und das ausgehende Kabel zu einem Kreuzverteiler vom zweiten Typ (CCP2, CCP3) führt.

5. Glasfasernetzwerk nach einem der Ansprüche 1 bis 4, wobei
jedes eingehende Kabel eines Kreuzverteilers vom ersten Typ (CCP1) über einen Bypass mit einem ausgehenden Kabel des Kreuzverteilers vom ersten Typ (CCP1) verbunden ist.

6. Glasfasernetzwerk nach einem der Ansprüche 1 bis 5, aufweisend
eine zentrale Netzwerksteuervorrichtung, die mit den remote schaltbaren Bypässen verbunden ist, um die Bypässe im Falle des Ausfalls der Kreuzverteiler vom ersten Typ (CCP1) remote zu aktivieren.

7. Glasfasernetzwerk nach Anspruch 6, wobei die zentrale Netzwerksteuervorrichtung zum Aktivieren der Bypässe über ein Steuernetzwerk mit den Bypässen verbunden ist, das funktional unabhängig von den Kreuzverteilern des ersten Typs (CCP1) ist.

8. Glasfasernetzwerk nach einem der Ansprüche 1 bis 7, wobei ein Bypass einen Splitter oder Switch aufweist, der ein eingehendes Kabel mit einem durch die Netzwerksteuervorrichtung wählbaren ausgehenden Kabel des Kreuzverteilers vom ersten Typ (CCP1) verbindet.

9. Glasfasernetzwerk nach einem der Ansprüche 1 bis 8, wobei die Zahl k der Kreuzverteiler vom ersten Typ (CCP1) um nicht mehr als einen Schwellwert S von der Zahl m der Kreuzverteiler vom zweiten Typ (CCP2, CCP3) abweicht, wobei
S kleiner ist als ein 30-tel von k;
S vorzugsweise kleiner ist als ein 20-tel von k
S weiter vorzugsweise kleiner ist als ein 10-tel von k.

10. Glasfasernetzwerk nach einem der Ansprüche 1 bis 9, wobei in einer beliebigen Teilfläche F1, die um einen Faktor F2 kleiner ist als die Gesamtfläche des Netzes und die mindestens zwei Kreuzverteiler enthält, mindestens ein Kreuzverteiler vom ersten Typ (CCP1) und mindestens ein Kreuzverteiler vom zweiten Typ (CCP2, CCP3) vorgesehen ist, wobei
F gleich 5 ist;
F vorzugsweise gleich 10 ist,
weiter vorzugsweise F gleich 20 ist,
weiter vorzugsweise F gleich 30 ist;
weiter vorzugsweise F gleich 40 ist;
weiter vorzugsweise F gleich 50 ist.

11. Glasfasernetzwerk nach einem der Ansprüche 1 bis 9, wobei
der Kreuzverteiler vom ersten Typ (CCP1) ein Kreuzverteiler eines ersten Herstellers ist und der Kreuzverteiler vom zweiten Typ (CCP2, CCP3) ein Kreuzverteiler eines zweiten Herstellers ist, und/oder wobei
der Kreuzverteiler vom ersten Typ (CCP1) ein Kreuzverteiler aus einem ersten Herstellungsland ist und der Kreuzverteiler vom zweiten Typ (CCP2, CCP3) ein Kreuzverteiler aus einem zweiten Herstellungsland ist, und/oder wobei
der Kreuzverteiler vom ersten Typ (CCP1) sich vom Kreuzverteiler vom zweiten Typ in mindestens einer Soft- und/oder Hardwarekomponente vom Kreuzverteiler des zweiten Typs unterscheidet.

## Claims

1. Fiber optic network comprising a plurality of N nodes, which are each implemented by means of optical cross-connects, wherein the fiber optic network extends over an area F and comprises:
a plurality of k nodes, which are each implemented by means of an optical cross-connect (CCP1) of a first type;
a plurality of m nodes, which are each implemented by means of an optical cross-connect of a second type (CCP2, CCP3),
wherein the network is further configured such that, starting from any arbitrary cross-connect of the first type (CCP1) of the fiber optic network, at least one cross-connect of the second type (CCP2, CCP3) of the fiber optic network is reachable via at least one network path as a maximum of an n-th hop from the arbitrary cross-connect of the first type (CCP1),
**characterized in that** the fiber optic network, for safeguarding against the simultaneous failure of several or all optical cross-connects of the first type (CCP1),
comprises:
for all cross-connects of the first type, a remotely switchable bypass connecting a fiber optic cable incoming at the cross-connect of the first type (CCP1) to a fiber optic cable outgoing from the cross-connect of the first type;
a switching device for remotely activating the bypasses provided for the cross-connects of the first type and thus bypassing the cross-connects of the first type.

2. Fiber optic network according to claim 1, wherein n is small compared to the total number N of cross-connects in the network, wherein n is smaller than N/10ths, preferably smaller than N/20ths, further preferably n is smaller than 10, preferably smaller than 6, further preferably n is smaller than three and particularly preferably n is smaller than 2.

3. Fiber optic network according to claim 1 or 2, wherein a remotely switchable bypass of a cross-connect of the first type (CCP1) comprises:
a switch attached to the incoming fiber optic cable;
a bypass cable bypassing the cross-connect;
a combiner connecting the bypass cable to the outgoing cable.

4. Fiber optic network according to any one of claims 1 to 3, wherein the incoming cable of the bypass comes from a cross-connect of the second type (CCP2, CCP3) and the outgoing cable leads to a cross-connect of the second type (CCP2, CCP3).

5. Fiber optic network according to any one of claims 1 to 4, wherein each incoming cable of a cross-connect of the first type (CCP1) is connected via a bypass to an outgoing cable of the cross-connect of the first type (CCP1).

6. Fiber optic network according to any one of claims 1 to 5, comprising a central network control device connected to the remotely switchable bypasses in order to remotely activate the bypasses in the event of failure of the cross-connects of the first type (CCP1).

7. Fiber optic network according to claim 6, wherein the central network control device for activating the bypasses is connected to the bypasses via a control network which is functionally independent of the cross-connects of the first type (CCP1).

8. Fiber optic network according to any one of claims 1 to 7, wherein a bypass comprises a splitter or switch connecting an incoming cable to an outgoing cable of the cross-connect of the first type (CCP1) selectable by the network control device.

9. Fiber optic network according to any one of claims 1 to 8, wherein the number k of cross-connects of the first type (CCP1) deviates by no more than a threshold value S from the number m of cross-connects of the second type (CCP2, CCP3), wherein
S is smaller than one 30th of k;
S is preferably smaller than one 20th of k;
S is further preferably smaller than one 10th of k.

10. Fiber optic network according to any one of claims 1 to 9, wherein in any arbitrary sub-area F1, which is smaller by a factor F2 than the total area of the network and which contains at least two cross-connects, at least one cross-connect of the first type (CCP1) and at least one cross-connect of the second type (CCP2, CCP3) are provided, wherein
F is equal to 5;
F is preferably equal to 10,
further preferably F is equal to 20,
further preferably F is equal to 30;
further preferably F is equal to 40;
further preferably F is equal to 50.

11. Fiber optic network according to any one of claims 1 to 9, wherein
the cross-connect of the first type (CCP1) is a cross-connect of a first manufacturer and the cross-connect of the second type (CCP2, CCP3) is a cross-connect of a second manufacturer, and/or wherein
the cross-connect of the first type (CCP1) is a cross-connect from a first country of manufacture and the cross-connect of the second type (CCP2, CCP3) is a cross-connect from a second country of manufacture, and/or wherein
the cross-connect of the first type (CCP1) differs from the cross-connect of the second type in at least one software and/or hardware component of the cross-connect of the second type.

## Revendications

1. Réseau à fibres optiques comportant une pluralité de N nœuds, qui sont mis en œuvre chacun au moyen de répartiteurs optiques, dans lequel le réseau à fibres optiques s'étend sur une surface F et présente:
une pluralité de k nœuds, qui sont mis en œuvre chacun au moyen d'un répartiteur optique (CCP1) d'un premier type;
une pluralité de m nœuds, qui sont mis en œuvre chacun au moyen d'un répartiteur optique d'un deuxième type (CCP2, CCP3),
dans lequel le réseau est en outre structuré de telle sorte que, partant d'un répartiteur quelconque du premier type (CCP1) du réseau à fibres optiques, au moins un répartiteur du deuxième type (CCP2, CCP3) du réseau à fibres optiques est accessible via au moins un chemin de réseau au maximum au n-ième saut depuis le répartiteur quelconque du premier type (CCP1),
**caractérisé en ce que** le réseau à fibres optiques présente, pour la protection contre la défaillance simultanée de plusieurs ou de la totalité des répartiteurs optiques du premier type (CCP1):
pour tous les répartiteurs du premier type, un bypass commutable à distance, qui relie un câble à fibres optiques entrant au niveau du répartiteur du premier type (CCP1) à un câble à fibres optiques sortant du répartiteur du premier type;
un dispositif de commutation pour activer à distance les bypass prévus pour les répartiteurs du premier type et contourner ainsi les répartiteurs du premier type.

2. Réseau à fibres optiques selon la revendication 1, dans lequel n est petit par rapport au nombre total N de répartiteurs dans le réseau, dans lequel n est inférieur à N/10ème, de préférence inférieur à N/20ème, plus préférablement n est inférieur à 10, de préférence inférieur à 6, plus préférablement n est inférieur à trois et particulièrement de préférence n est inférieur à 2.

3. Réseau à fibres optiques selon la revendication 1 ou 2, dans lequel un bypass commutable à distance d'un répartiteur du premier type (CCP1) présente:
un commutateur (switch) monté sur le câble à fibres optiques entrant;
un câble de bypass qui contourne le répartiteur;
un combineur qui relie le câble de bypass au câble sortant.

4. Réseau à fibres optiques selon l'une des revendications 1 à 3, dans lequel le câble entrant du bypass provient d'un répartiteur du deuxième type (CCP2, CCP3) et le câble sortant mène à un répartiteur du deuxième type (CCP2, CCP3).

5. Réseau à fibres optiques selon l'une des revendications 1 à 4, dans lequel chaque câble entrant d'un répartiteur du premier type (CCP1) est relié via un bypass à un câble sortant du répartiteur du premier type (CCP1).

6. Réseau à fibres optiques selon l'une des revendications 1 à 5, présentant un dispositif de commande de réseau central qui est relié aux bypass commutables à distance pour activer à distance les bypass en cas de défaillance des répartiteurs du premier type (CCP1).

7. Réseau à fibres optiques selon la revendication 6, dans lequel le dispositif de commande de réseau central pour l'activation des bypass est relié aux bypass via un réseau de commande qui est fonctionnellement indépendant des répartiteurs du premier type (CCP1).

8. Réseau à fibres optiques selon l'une des revendications 1 à 7, dans lequel un bypass présente un séparateur (splitter) ou un commutateur qui relie un câble entrant à un câble sortant du répartiteur du premier type (CCP1) pouvant être sélectionné par le dispositif de commande de réseau.

9. Réseau à fibres optiques selon l'une des revendications 1 à 8, dans lequel le nombre k de répartiteurs du premier type (CCP1) ne s'écarte pas de plus d'une valeur seuil S du nombre m de répartiteurs du deuxième type (CCP2, CCP3), dans lequel
S est inférieur à un 30ème de k;
S est de préférence inférieur à un 20ème de k;
S est plus préférablement inférieur à un 10ème de k.

10. Réseau à fibres optiques selon l'une des revendications 1 à 9, dans lequel il est prévu, dans une surface partielle quelconque F1, qui est plus petite d'un facteur F2 que la surface totale du réseau et qui contient au moins deux répartiteurs, au moins un répartiteur du premier type (CCP1) et au moins un répartiteur du deuxième type (CCP2, CCP3), dans lequel
F est égal à 5,
F est de préférence égal à 10,
plus préférablement F est égal à 20,
plus préférablement F est égal à 30,
plus préférablement F est égal à 40,
plus préférablement F est égal à 50.

11. Réseau à fibres optiques selon l'une des revendications 1 à 9, dans lequel
le répartiteur du premier type (CCP1) est un répartiteur d'un premier fabricant et le répartiteur du deuxième type (CCP2, CCP3) est un répartiteur d'un deuxième fabricant, et/ou dans lequel
le répartiteur du premier type (CCP1) est un répartiteur provenant d'un premier pays de fabrication et le répartiteur du deuxième type (CCP2, CCP3) est un répartiteur provenant d'un deuxième pays de fabrication, et/ou dans lequel
le répartiteur du premier type (CCP1) se distingue du répartiteur du deuxième type par au moins un composant logiciel et/ou matériel du répartiteur du deuxième type.
